# EUROPEAN PATENT APPLICATION

(11) **EP 2 027 769 A1**
(43) Date of publication of application: **25.02.2009**
(21) Application number: 07114147.7
(22) Date of filing: 10.08.2007
(51) Int. Cl.: A01G 9/14, C08J 5/18, C08K 3/00, C08K 3/22, C08K 5/00, C08K 5/098, A01G 13/02

(54) **Degradable Polymeric Films**

(71) Applicant: Polymers CRC Limited, Notting Hill, VIC 3168 (AU)
(72) Inventor: The designation of the inventor has not yet been filed
(74) Representative: Hübner, Gerd

(57) **Abstract**

The present invention relates to a polymer composition containing an inorganic compound which upon exposure to radiation starts or accelerates the decomposition/degradation of the polymer substrate. Further aspects of the invention are a method for increasing or starting the decomposition/degradation of a polymer substrate, the use of an inorganic compound which upon exposure to radiation accelerates or starts the decomposition/degradation of a polymer and polymeric articles made from such a composition.

## Description

The present invention relates to a polymer composition containing an inorganic compound which upon exposure to radiation starts or accelerates the decomposition/degradation of the polymer substrate. Further aspects of the invention are a method for increasing or starting the decomposition/degradation of a polymer substrate, the use of an inorganic compound which upon exposure to radiation accelerates or starts the decomposition/ degradation of a polymer and polymeric articles made from such a composition.

Plastic articles find widespread applications in everyday life because of their durability in use and cost effectiveness. With proper stabilization, most commercial plastics are made to last for years.

In recent years, however, environmental concern has lead to the development of so called biodegradable materials, of diverse origin and nature, which will maintain their function and integrity during service life, but disintegrate after use into carbon dioxide and water, either triggered by chemical means or by microorganisms. One problem, however, is establishing a suitable equilibrium between biodegradability and integrity during service life.

Compostable thermoplastic compositions are described in e.g. US-A-5,258,422.

Degradable synthetic polymeric compounds are disclosed in e.g. US-A-5,352,716.

Polyolefin compositions and degradable films made therefrom are disclosed in e.g. US-A-3,454,510.

Degradable/compostable concentrates, process for making degradable/compostable packaging materials and the products thereof are described in e.g. US-A-5,854,304.

Chemically degradable polyolefin films are disclosed in e.g. US-A-5,565,503.

On the other hand photodegradable polyolefin compositions are described in e.g. JP-A-Sho 50-34,045.

The use of photosensitizing additives to enhance photo-degradability takes advantage of the natural tendency of most organic polymers to undergo gradual reaction with atmospheric oxygen, particularly in the presence of light. The photosensitizing additive absorbs ultraviolet light (e.g., from sunlight); the additive, in the resulting photo-excited state, undergoes a chemical reaction that leads to the generation of free radicals, which initiate an autoxidation process thereby leading to the eventual disintegration of the plastic material.

However, there are some difficulties with the use of degradable plastic films of the aforementioned kind in that the time to embrittlement is governed by the loading of the photosensitizing additive, making it necessary to produce multiple films of different formulations in order to obtain a balance between the desired life time and the time until complete breakdown of the plastic film occurs. Further, these films are essentially nondegradable in the dark.

One objective of the present invention is to provide a polymer film, which will degrade when desired, and at desired rates, depending on the end application-both in the light and in the dark. Such a film is, for example, useful for agricultural applications.

For example, under such films crops or other plants may grow. Degradation can be started by appropriate exposure to radiation. The radiation may be supplied at the time of the production of the film, or immediately before, during or following use of the film to commence degradation of the film. It may be applied in one or more predetermined zones of the film, or across the full surface area. Once degradation is initiated it continues, including while the film is positioned over the crops and plants. This radiation treatment may be the only treatment after manufacture, or may follow an earlier pretreatment at the time of manufacture. The level of radiation is used to control the rate of degradation of the film.

The current invention provides for a significantly better control over the start of degradation, the extent and timing of degradation levels, and moreover, the areas where degradation is to occur, including those sections of film placed in the dark, for example under the soil or in landfill. The invention is particularly useful for very thin (between 3 and 10 micron), polyolefin films, particularly pre-stretched polyolefin films. The use of such films provides significant cost benefits through material savings, while the physical properties of the films are such that they are sufficiently tough to withstand the demands of the envisaged applications.

It is the combination of prodegradants with irradiation timed as required during use to initiate more rapid degradation in these thin films that provides the key advantage of this technique.

A further advantage is the use of synergistic additive combinations, which can lead to an increased rate of thermal aging and control of whitening under sunlight exposure. For example, by the addition of hydrocarbon additives, films containing prodegradants that typically cause whitening on aging in the sun remain transparent for an extended period of time. This may be sufficient to enable practical use in, for example, horticultural applications wherein plants require good light transmittance. However, it should be noted that in some circumstances, whitening may be a beneficial effect that would be of particular value, such as for weed suppression and/or light reflection/heat reduction as the plant ages when the film is used as a mulch film, so that a particular advantage is that whitening control is optional. Further combinations of prodegradants that operate by different mechanisms (e.g. metal stearates in combination with, for example, titania or metal-doped transition metal oxides, for example, iron-doped titania) often demonstrate a greatly enhanced rate of carbonyl formation upon thermal aging in the dark, as compared to films containing the prodegradant system alone. Amphiphilic additives may also potentially accelerate the rate of thermal oxidation.

One aspect of the invention is a composition comprising
a) a thermoplastic or elastomeric polymer;
b) at least one polymer prodegradant selected from the group consisting of inorganic metal oxides and metal carboxylates;
characterized in that the composition is activatable by irradiation to increase the rate of degradation.

Suitable thermoplastic or elastomeric polymers are given below.
1. Polymers of monoolefins and diolefins, for example polypropylene, polyisobutylene, polybut-1-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, Vlb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethyleneacrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
   Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
6c. Hydrogenated aromatic polymers derived from hydrogenation of polymers mentioned under 6a.).
   Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.
19. Polycarbonates and polyester carbonates.
20. Polyketones.
21. Polysulfones, polyether sulfones and polyether ketones.
22. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.

Preferably the thermoplastic or elastomeric polymer is a thermoplastic polymer, in particular preferred is a polyolefin. Examples for polyolefins are given above under items 1.) to 4.).

For example the polyolefin is polyethylene, polypropylene, a polyethylene copolymer or a polypropylene copolymer.

As metal oxides, there come into consideration the oxides of, Mn, Fe, W, Co, Ni, Zn, Ti and Ce, in particular TiO₂, ZnO, WO₂ and Fe₂O₃. TiO₂ may be in the form of Rutile or Anatase, preferred is Anatase. It is also possible to use combinations of afore mentioned metal oxides.

The titanium oxide may also be doped, wherein at least a portion of the titanium dioxide particles comprise, in their crystal lattice, metal ions selected from the group consisting of copper, manganese, nickel, cobalt, iron, and zinc.

The method of synthesizing the photoactive metal oxide particles is via either the sol-gel process, hydrothermal methods, solvo-thermal methods or by emulsion process or by chemical precipitation. In the preferred embodiment, the sol-gel process involves hydrolysis and polycondensation of metal alkoxides or salts and can be carried out either in aqueous or nonaqueous media to produce metal oxides with desired particle size, structure and morphology.

The photoactive metal oxide may also be produced by modification of metal alkoxides to produce clusters. For example, the modification of titanium alkoxide by reaction with acetic acid results in the formation of molecular titanium oxo-alkoxide cluster of the following formula - Ti₆(µ₃-O)2(µ₂-O)2(CH₃COO)₈(µ₂-OiPr)₂(OiPr)₆ (abbreviated as [Ti₆O₄]). These hexanuclear compounds of titanium are small-size clusters (the number of atoms is approximately 150 and the diameter approx 30 A). Their structure determines to some degree the morphology of the end product.

Alternatively, the photoactive metal oxide is produced by combustion or thermal decomposition via spray or aerosol, atomizing from a starting colloidal solution or precursor to prepare particles in the required size range.

The photoactive metal oxides may also be produced via spray pyrolysis of a solution or precursor or by thermal decomposition of precursors from a solution or by thermal deposition in vacuum such as chemical vapour deposition and plasma processing methods.

Further, the photoactive metal oxides may be produced by comminuting semiconductor materials either in dry or in solution form via ball milling, attrition milling or vibrating milling so that the particle size of the metal oxides is within the desired size range.

As another alternative, the photoactive metal oxides may be produced by melting or rapid quenching, by microwave processing, by ultrasonic processing, by electrochemical and mechanochemical methods or by cryochemical (freeze-drying) method so that the particle size of the metal oxides is within the range required.

As a further option, photoactive titania in the form of nanostructured silica/titania composites, or other inert carrier-semiconductor particulate systems with controlled morphology,may offer advantages. One specific preferred embodiment concerns the size and distribution of the titania domains in or on a silica (inert carrier) matrix, such that by reducing the size of the titania domains to the level of so-called quantum dots, the absorption band edge will occur at wavelengths shorter than is provided by terrestrial solar radiation, thus increasing the stability on exposure to normal sunlight. Furthermore, by maintaining separation between the titania nanooparticles through fixation on the silica plate, thus confining the particles and preventing agglomeration, the quantum efficiency may be increased while also maintaining transparency to visible radiation.

The terms titanium dioxide and titania are used as synonyms in the context of the present invention. In the context of the present invention both terms comprise the doped titania and the titania which is fixed on a carrier, such as silica.

The metal oxides, in particular titanium dioxide, also may have been surface modified, for example to improve the contact between the metal oxide and the polymer matrix. These additives may be covalently bound to the titania surface, or they may be associated with the prodegradant by a mechanism other than direct covalent linkage. These materials may be bound to the prodegradant prior to masterbatch preparation and/or film extrusion; alternatively, they may be added during processing in such a way that mixing in the melt provides sufficient contact between the prodegradant and the additive to allow for an interaction between the two. Additives such as hydrophobic materials containing binding sites, or others that enable the titania surface to be altered in such a way as to modify the interface between the prodegradant and the polymeric matrix. In particular this modification could consist of chemical coupling of the surface functional groups of titania to compounds having end-groups that are able to react with these functional groups: for example, alkoxysilanes like γ-glycidoxypropyltrimethoxysilane, n-hexyltrimethoxysilane, isobutyl-trimethoxysilane, γ-methacryloxypropyltrimethoxysilane, n-octadecyltrimethoxysilane, and n-propyltrimethoxysilane dicyclohexyldimethoxysilane, diethyldiethoxysilane, dimethyldichlorosilane, dimethyldiethoxysilane, dimethyldimethoxysilane, diphenyldiethoxysilane, diphenyldimethoxysilane, di-n-hexyldichlorosilane, n-hexylmethyldichlorosilane, methyldodecyl-diethoxysilane, neophylmethyldimethoxysilane, and n-octylmethyldimethoxysilane; and n-octadecyldimethylmethoxysilane, triethylsilanol, trimethylethoxysilane, and trimethylmethoxysilane; or halosilanes, such as Sigmacote (a commercially available chlorinated organopolysiloxane solution in heptane, available from Sigma-Aldrich); or fatty acids, such as oleic acid, stearic acid, linoleic acid, linolenic acid; or phosphine derivatives such as trioctyl phosphine and or surfactant materials, such as sodium dodecylbenzenesulfonate (DBS); and more particular oleic acid, octadecyltrimethoxysilane, Sigmacote, trioctyl phosphine and sodium dodecylbenzenesulfonate.

Amphiphilic materials including block copolymers and other surfactants, either with functional end groups or as components of the composition, may also be envisaged as additives to modify the interaction between titania and the polymeric matrix. Examples would include Irgasurf HL 560 (a commercial product from Ciba), Efka-4300 (a commercial high molecular-weight dispersing agent from Ciba), Efka 5207 (a commercial wetting and dispersing agent from Ciba), and organic acids, in particular oleic acid, polyethylene-co-acrylic acid and Efka 5207.

In a preferred embodiment the inorganic metal oxide is a titanium dioxide, which can be surface modified as described above.

As metal carboxylate comes into consideration a metal salt of a fatty acid with a carbon number ranging from C₂ to C₃₆, in particular from C₁₂ to C₃₆ is preferred. Particularly preferred examples are metal carboxylates of palmitic acid (C₁₆), stearic acid (C₁₈), oleic acid (C₁₈), linoleic acid (C₁₈), linolenic acid (C₁₈) and naphthenic acid. As C₂-C₃₆carboxylate, in particular stearate, palmitate or naphthenate, of Fe, Ce, Co, Mn or Ni are of particular interest. Particularly preferred is Fe-stearate. It is, however, also possible to use mixtures of the afore mentioned metal carboxylates.

For example the polymer prodegradant is a mixture of titanium dioxide and a metal carboxylate.

The metal oxides and metal carboxylates are items of commerce and may be used in their various commercial grades.

The polymer prodegradant is typically present in an amount of from 0.1 to 20% by weight, preferably 0.2 to 10% percent by weight and most preferably from 0.5 to 3% by weight based on the weight of the thermoplastic or elastomeric polymer.

For example the polymer prodegradant, in particular titanium dioxide, is a nano scale particle. Such grades are also commercially available.

The titanium dioxide useful in accordance with the present invention may have a particle size such that the largest dimension of the particle is less than 200 nm, preferably from 1 nm to 100 nm, most preferably from 1 nm to 30 nm.

The prodegradant is activated, for example, by corona treatment or by irradiating the film with UV radiation, near-IR radiation, or any other suitable radiation including heat to commence a controlled degradation of the film from the point in time that the film is so treated. The activating treatment process may occur at the film production facility, or immediately before its end use, for example as an agricultural cover film or mulch film, or at some stage during its end use, for example by treatment of shopping bags at point of sale, or post-treatment of agricultural or non-agricultural films at time of disposal into a waste treatment facility, or a combination of treatments may be used. Post-irradiation could be of particular benefit for those films that most desirably have as long a service life as possible e.g. greenhouse covers or long-term mulches, but that then need to be made degradable following use. The activation process may be spatially controlled so the film may degrade at different rates in different regions of the film or as a result of differing levels of exposure to the treatment regime. Subsequent degradations are designed to occur either upon solar exposure or under mild thermal oxidation (as may occur on soil burial). In alternative embodiments, the aim may be to neutralize the stabilizing effect of a film formulation that normally inhibits degradation but when neutralized allows degradation to occur by the usual mechanisms.

Preferably the radiation is UV-light between 250 nm and 380 nm.

A specifically preferred embodiment of the invention is a composition comprising
a) a polyethylene,a polypropylene, a polyethylene copolymer or a polypropylene copolymer;
b) a titanium dioxide and
c) optionally a Fe-stearate;
characterized in that the composition has been subjected to radiation.

The composition may contain additionally additives selected from the group consisting of antioxidants, light stabilizers, processing stabilizers, clarifiers, antistatic- antifogging agents and or those additives that reduce or eliminate whitening of the film aging.

Examples for suitable additional additives are given below.
1. Antioxidants
1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.
1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.
1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.
1.4. Tocopherols, for example α-tocopherol, β-tocopherol, γ-tocopherol, δ-tocophero and mixtures thereof (vitamin E).
1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide.
1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(a-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis(5-tert-butyl-4-hydroxy2-methylphenyl)-4-n-dodecylmercaptobutane, 1,1,5,5-tetra-(5-tert-butyl-4-hydroxy-2-methylphenyl)pentane.
1.7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.
1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, didodecylmercaptoethyl-2,2-bis (3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
1.10. Triazine compounds, for example 2,4-bis(octylmercapto)-6-(3,5-di-tert-butyl-4-hydroxy-anilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanu rate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.
1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.
1.12. Acylaminophenols, for example 4-hydroxylauranilide, 4-hydroxystearanilide, octyl N-(3,5-di-tert-butyl-4-hydroxyphenyl)carbamate.
1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane.
1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard^{®}XL-1, supplied by Uniroyal).
1.18. Ascorbic acid (vitamin C)
1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenyl-amine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butyl-aminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylamino-methylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenyl-amino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenyl-amines, a mixture of mono- and dialkylated nonyldiphenylamines, a mixture of mono- and dialkylated dodecyldiphenylamines, a mixture of mono- and dialkylated isopropyl/isohexyl-diphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octyl-phenothiazines, N-allylphenothiazine, N,N,N',N'-tetraphenyl-1,4-diaminobut-2-ene.
2. UV absorbers and light stabilizers
2.1. 2-(2'-Hydroxyphenyl)benzotriazoles, for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl-2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 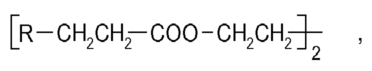 where R = 3'-tert-butyl-4'-hydroxy-5'-2H-benzotri-azol-2-ylphenyl, 2-[2'-hydroxy-3'-(a,a-dimethylbenzyl)-5'-(1,1,3,3-tetramethylbutyl)-phenyl]-benzotriazole; 2-[2'-hydroxy-3'-(1,1,3,3-tetramethylbutyl)-5'-(α,α-dimethylbenzyl)-phenyl]benzotriazole.
2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
2.3. Esters of substituted and unsubstituted benzoic acids, for example 4-tert-butyl-phenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxy-cinnamate, methyl α-carbomethoxy-p-methoxycinnamate, N-(β-carbomethoxy-β-cyanovinyl)-2-methylindoline, neopentyl tetra(α-cyano-β,β-diphenylacrylate.
2.5. Nickel compounds, for example nickel complexes of 2,2'-thio-bis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenylundecylketoxime, nickel complexes of 1-phenyl-4-lauroyl-5-hydroxypyrazole, with or without additional ligands.
2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-aminopiperidine or 1,2,2,6,6-pentamethyl-4-aminopiperidine, 2,4-bis[N-(1-cyclohexyloxy-2,2,6,6-tetramethylpiperidine-4-yl)-N-butylamino]-6-(2-hydroxyethyl)amino-1,3,5-triazine, 1-(2-hydroxy-2-methylpropoxy)-4-octadecanoyloxy-2,2,6,6-tetramethylpiperidine, 5-(2-ethylhexanoyl)-oxymethyl-3,3,5-trimethyl-2-morpholinone, Sanduvor (Clariant; CAS Reg. No. 106917-31-1], 5-(2-ethylhexanoyl)oxymethyl-3,3,5-trimethyl-2-morpholinone, the reaction product of 2,4-bis-[(1-cyclohexyloxy-2,2,6,6-piperidine-4-yl)butylamino]-6-chloro-s-triazine with N,N'-bis(3-aminopropyl)ethylenediamine), 1,3,5-tris(N-cyclohexyl-N-(2,2,6,6-tetramethylpiperazine-3-one-4-yl)amino)-s-triazine, 1,3,5-tris(N-cyclohexyl-N-(1,2,2,6,6-pentamethylpiperazine-3-one-4-yl)-amino)-s-triazine.
2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.
2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyl-oxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine, 2,4-bis(4-[2-ethylhexyloxy]-2-hydroxyphenyl)-6-(4-methoxyphenyl)-1,3,5-triazine.
3. Metal deactivators, for example N,N'-diphenyloxamide, N-salicylal-N'-salicyloyl hydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-dicumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo-[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.
   The following phosphites are especially preferred:
   Tris(2,4-di-tert-butylphenyl) phosphite (Irgafos^{®}168, Ciba Specialty Chemicals Inc.), tris(nonylphenyl) phosphite, 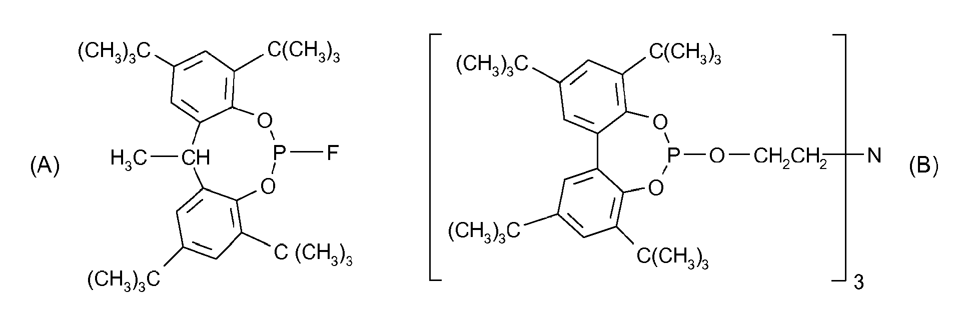 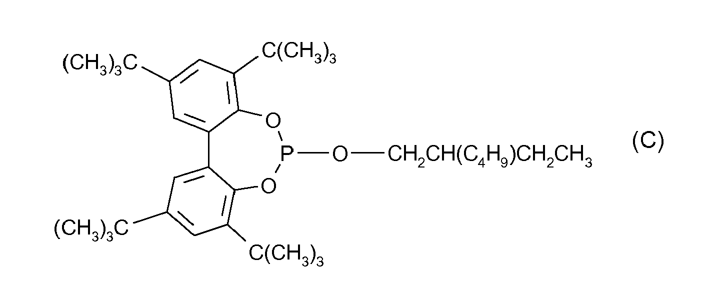 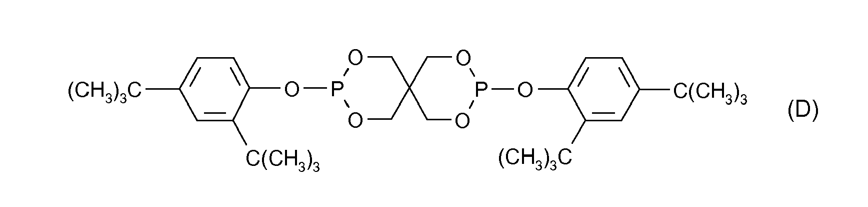 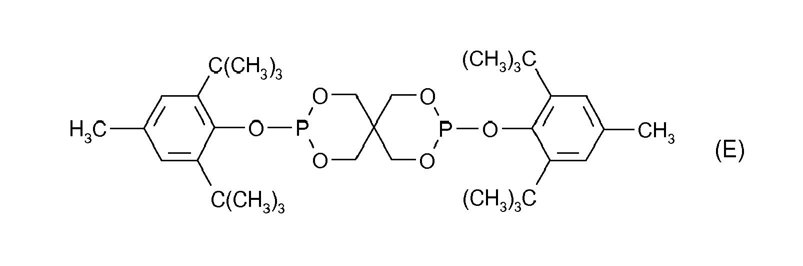 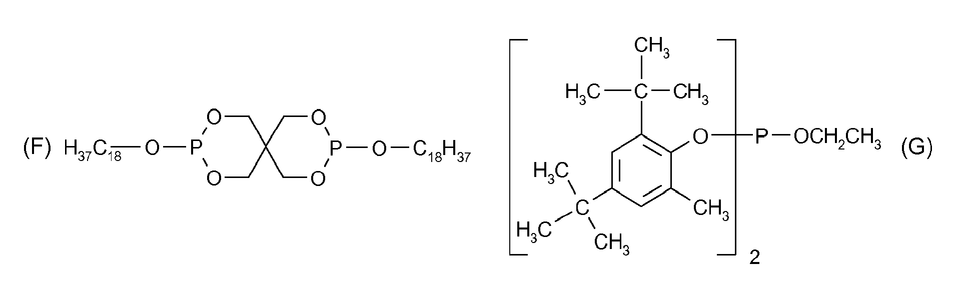
5. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
6. Nitrones, for example, N-benzyl-alpha-phenylnitrone, N-ethyl-alpha-methylnitrone, N-octyl-alpha-heptylnitrone, N-lauryl-alpha-undecylnitrone, N-tetradecyl-alpha-tridecylnnitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecylnitrone, nitrone derived from N,N-dialkylhydroxylamine derived from hydrogenated tallow amine.
7. Thiosynergists, for example dilauryl thiodipropionate, dimistryl thiodipropionate, distearyl thiodipropionate or distearyl disulfide.
8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
9. Polyamide stabilizers, for example copper salts in combination with iodides and/or phosphorus compounds and salts of divalent manganese.
10. Basic co-stabilizers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.
11. Nucleating agents, for example inorganic substances, such as talcum, metal oxides, such as titanium dioxide or magnesium oxide, phosphates, carbonates or sulfates of, preferably, alkaline earth metals; organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbitol, 1,3:2,4-di(paramethyl-dibenzylidene)sorbitol, and 1,3:2,4-di(benzylidene)sorbitol.
12. Fillers and reinforcing agents, for example calcium carbonate, silicates, glass fibres, glass beads, asbestos, talc, kaolin, mica, barium sulfate, metal oxides and hydroxides, carbon black, graphite, wood flour and flours or fibers of other natural products, synthetic fibers.
13. Other additives, for example plasticisers, lubricants, emulsifiers, pigments, rheology additives, catalysts, flow-control agents, optical brighteners, flameproofing agents, antistatic agents and blowing agents.
14. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839, EP-A-0591102; EP-A-1291384 or 3-[4-(2-acetoxyethoxy)phenyl]-5,7-di-tert-butylbenzofuran-2-one, 5,7-di-tert-butyl-3-[4-(2-stearoyloxy-ethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butylbenzofuran-2-one, 3-(2-acetyl-5-isooctylphenyl)-5-isooctyl-benzofuran-2-one.
15. Additives that reduce or eliminate whitening of the film following aging, for example materials having a refractive index approximately matching that of the bulk material. Such materials could include, but are not limited to, oils and waxes. Waxes can include animal, vegetable, mineral and synthetic waxes, for example petrolatum (Vaseline.RTM.), polyolefin waxes, such as polybutene and polyethylene waxes, wool wax and its derivatives, such as wool wax alcohols, and silicone waxes. Oils can include vegetable oils, animal oils, mineral oils, silicone oils or their mixtures. In particular, hydrocarbon oils, such as paraffin oils, isoparaffin oils, squalane, oils from fatty acids and polyoles are preferred. Hydrocarbon oils, especially mineral oils (paraffinum liquidum), are especially preferred, in particular Mobil DTE Heavy oil.

The additional additives are, for example, present in the composition in an amount of 0.001 to 10% by weight, preferably 0.001 to 5% by weight, relative to the weight of the polymer (component a)).

A further aspect of the invention is a method of increasing or starting the degradation of a thermoplastic or elastomeric polymer by incorporating into the polymer at least one polymer prodegradant selected from the group consisting of inorganic metal oxides and metal carboxylates; characterized in that the polymer prodegradant in the thermoplastic or elastomeric polymer is subjected to radiation.

The additives of the invention and optional further components may be added to the polymer material individually or mixed with one another. If desired, the individual components can be mixed with one another before incorporation into the polymer for example by dry blending, compaction or in the melt.

The incorporation of the additives of the invention and optional further components into the polymer is carried out by known methods such as dry blending in the form of a powder, or wet mixing in the form of solutions, dispersions or suspensions for example in an inert solvent, water or oil, or by addition of the additive in the form of a spray or solution to the polymeric material following formation of the article. The additives of the invention and optional further additives may be incorporated, for example, before or after molding or also by applying the dissolved or dispersed additive or additive mixture to the polymer material, with or without subsequent evaporation of the solvent or the suspension/dispersion agent. They may be added directly into the processing apparatus (e.g. extruders, internal mixers, etc), e.g. as a dry mixture or powder or as solution or dispersion or suspension or melt.

The incorporation can be carried out in any heatable container equipped with a stirrer, e.g. in a closed apparatus such as a kneader, mixer or stirred vessel. The incorporation is preferably carried out in an extruder or in a kneader. It is immaterial whether processing takes place in an inert atmosphere or in the presence of oxygen.

The addition of the additive or additive blend to the polymer can be carried out in all customary mixing machines in which the polymer is melted and mixed with the additives. Suitable machines are known to those skilled in the art. They are predominantly mixers, kneaders and extruders.
The process is preferably carried out in an extruder by introducing the additive during processing.
Particularly preferred processing machines are single-screw extruders, contrarotating and corotating twin-screw extruders, planetary-gear extruders, ring extruders or cokneaders. It is also possible to use processing machines provided with at least one gas removal compartment to which a vacuum can be applied.

Suitable extruders and kneaders are described, for example, in Handbuch der Kunststoffextrusion, Vol. 1 Grundlagen, Editors F. Hensen, W. Knappe, H. Potente, 1989, pp. 3-7, ISBN:3-446-14339-4 *(*Vol. 2 Extrusionsanlagen 1986, ISBN 3-446-14329-7*)*.
For example, the screw length is 1 - 60 screw diameters, preferably 20-48 screw diameters. The rotational speed of the screw is preferably 1 - 800 rotations per minute (rpm), very particularly preferably 25 - 400 rpm.
The maximum throughput is dependent on the screw diameter, the rotational speed and the driving force. The process of the present invention can also be carried out at a level lower than maximum throughput by varying the parameters mentioned or employing weighing machines delivering dosage amounts.
If a plurality of components is added, these can be premixed or added individually.

The additives of the invention and optional further additives can also be added to the polymer in the form of a masterbatch ("concentrate") which contains the components in a concentration of, for example, about 1 % to about 40% and preferably 2 % to about 20 % by weight incorporated in a polymer. The polymer must not be necessarily of identical structure as the polymer where the additives are added finally. In such operations, the polymer can be used in the form of powder, granules, solutions, suspensions or in the form of latices.

Incorporation can take place prior to or during the shaping operation, or by applying the dissolved or dispersed compound to the polymer, with or without subsequent evaporation of the solvent. In the case of elastomers, these can also be stabilized as lattices. A further possibility for incorporating the additives of the invention into polymers is to add them before, during or directly after the polymerization of the corresponding monomers. In this context the additive of the invention can be added as it is or else in encapsulated form (for example in waxes, oils or polymers).

A further aspect of the invention is an article, made from a composition as described above, which is in the form of a film.

Preferably the film is initially translucent or transparent to visible light. Translucent or transparent in the context of the invention means, that at least 90 % of the incident visible light are transmitted. Visible light means light of the wave length from 400 nm to 750 nm.

The thickness of the films can range, for example, between 5 to 100 microns. Films from 10 to 60 microns are preferred. Blown films are particularly preferred.

In a specific embodiment of the invention the film has been stretched after production to increase its length and decrease its thickness, producing a cold drawn thin film.

The film may be of a single layer or be a multilayer construction, which has been manufactured by co-extrusion with up to 20 layers, preferably up to 7 layers, most preferably up to 5 layers.

For example it is a coextruded film with three to seven, for instance three to five layers.

The films can be coextruded by film extrusion such as blown film extrusion or by cast film extrusion or they can be laminated and they can include layers based on polymers such as polyamide (PA 6 or 6,6 or 11 or 12 or 6/6,6 copolymer including OPA), polyethylene terephthalate (PET including OPET), polyethylene naphthalate (PEN), ethylene vinyl alcohol (EvOH), polypropylene (including OPP), ethylene acrylic acid copolymers and their salts, ethylene methacrylic acid copolymers and their salts or polyvinylidenchloride (PVDC).

A brief description of some exemplary articles made in accordance with the invention follows.

Typically, the articles are required to have a relatively long shelf or service life followed by a relatively short period during which embrittlement and fragmentation occurs, either in situ or in a landfill. The articles may be film products comprising polyolefins or other organic polymers.

Such films may, for example, be used for packaging and particularly for agricultural applications, such as greenhouse, mulch, silage or bale wrap.

Specifically in the field of crop production, films of plastic material laid on the ground, usually at sowing or planting, readily provide a desirable micro-environment that enhances crop yield through the control of soil temperature, retention of moisture, and control of weed growth. They have also proved to be effective in reducing soil crusting, thus improving seed germination and seedling emergence. It is also important that the films be sufficiently strong and flexible such that they can be laid out over large surface areas by use of a machine without rupture or tearing. Normally, however, a film that has these mechanical properties and that will not degrade provides a problem for growth of seedlings after the initial germination phase. To make holes in the film by mechanical means at a suitable time may not be economically feasible. The properties of the film that, according to the present invention, enable the mechanical properties of the laid film to be controlled so that the film weakens such that plants may easily break through the film at a required period of time following germination, solves this issue. The film may be retained in place by partial burial and degradation of the exposed and the buried film may occur within the same growing season, the degradation extending to a stage where the film becomes a friable material that does not impede further use of the soil, or leave portions of film that are still large enough to foul cultivating implements, particularly under the soil.

It is a particular advantage of the instant invention, that degradation of the polymer film can be initiated to a different extend at spatially different places. This can be carried out by exposing only parts of the film to energy radiation with, for example, varying radiation.

Suitable polymer articles are plastic films, sheets, bags, blister packages, boxes, package wrappings, plastic fibers, tapes, agricultural articles such as twine agricultural films, mulch films, small tunnel films, banana bags, direct covers, geotextiles, landfill covers, industrial covers, waste covers, temporary scaffolding sheets, building films, silt fences, poultry curtains, films for building temporary shelter constructions, and the like.

In all of the foregoing examples, the article, made in accordance with the invention, will keep its properties during use and will degrade after its service life.

Mulch films represent a particular preferred embodiment of the present invention.

Mulch films are used to protect crops in the early stages of their development. Mulch films, depending on the type of crop and on the purpose, can be laid after the seeding or at the same time as the seeding. They protect the crop until the crop has reached a certain development stage. When the harvest is finished, the field is again prepared for cultivation.

Standard plastic films have to be collected and disposed in order to allow the new cultivation. The additive system of the present invention, when added to the standard plastic mulch films, allow the film to keep its properties until the crop has reached the required development, then degradation starts after exposure to radiation and the film is completely embrittled when the new cultivation has to be started.

The length of the service period and of the time to degradation and time to complete disappearance depends on the type of crop and on the environmental conditions. Depending on the specific time requirements, the amount of additive and radiation dose is designed.

By appropriately dosing the amount of the present additive system, the required service periods and time to degradation and disappearance can be obtained. Examples of typical life times of mulch films are 10 to 180 days, periods of use up to 24 months can also be required and achieved.

Preferably the films are used in an agricultural application which is selected from the group consisting of mulch films, small tunnel films, shading nets and direct covers.

In another embodiment the films are used in packaging, wrapping pallets and plastic bags.

In one embodiment of the invention the article has been subjected to radiation directly after production, to trigger polymer degradation.

In another embodiment the article has been subjected to radiation immediately before, during or following its use, to trigger polymer degradation.

It is, however, also possible to combine both embodiments.

For example, the film is treated with different radiation doses over its area, resulting in a selective predetermined rate of degradation.
The definitions and preferences described for the composition apply equally for the other aspects of the invention.

The following examples illustrate the invention.

### EXAMPLE 1

Four identical samples of commercial X-Tend™ photodegradable film, manufactured by Integrated Packaging in Victoria, Australia, are placed in plastic slide holders. X-Tend is a 6-micron blown polyethylene film containing 5% by weight of a commercial masterbatch - Ampacet™ 30091-K, containing iron stearate. These samples are irradiated in a Q-UV aging cabinet, which incorporates a battery of eight 40W Q-UV-A lamps, at a distance of 0.5 cm from the samples. The peak emission is at 340 nm, with a short wavelength profile that mimics solar radiation with a cut-off at 295 nm. All pre-irradiation and aging is conducted at ambient humidity. The samples are irradiated for 1.5 seconds, 5 seconds, 15 seconds and 60 seconds respectively.

Following this pre-irradiation, the samples are then aged in a Contherm digital series oven, fan-forced, thermostatted at 50° C. Periodically, the samples are withdrawn and the carbonyl index obtained by taking the ratio of the height of the carbonyl peak at 1714 cm⁻¹ to that of the reference peak at 1460 cm⁻¹, as measured using transmission infrared spectroscopy (Perkin Elmer FT-IR Spectrometer - Spectrum 1000, 4000- 500 cm⁻¹, 4cm⁻¹ resolution). The period in months that has transpired is recorded when the sample reaches embrittlement (Table 1).

**Table 1: Effect of pre-irradiation under UV-A followed by thermal aging on time to embrittlement of iron stearate-containing films**

| **Time of pre-irradiation (sec)** | **Months to embrittlement** |
|---|---|
| 1.5 | 12 |
| 5 | 12 |
| 15 | 10.5 |
| 60 | 9 |

At 9 months, the carbonyl indexes are measured and also demonstrate the effect of longer irradiation times, with the sample that is irradiated for 5 seconds having a carbonyl index of 0.084, in comparison with the sample that is irradiated for 60 seconds, with a carbonyl index of 0.173.

### EXAMPLE 2

Oleic acid-coated nanoscale titania (anatase) nanorods (approximately 4 x 25 nm in dimension) are prepared by means of a sol-gel technique process. A mixture of 160mL of oleic acid (technical grade - 90% - from Sigma-Aldrich), 8mL of titanium (IV) isopropoxide (97% from Sigma-Aldrich) and 2 mL triethylamine (≥98% pure from Fluka) is heated to 110° C in a 500 mL, three-necked round-bottomed flask fitted with magnetic stirrer bar, nitrogen inlet and outlet, and condenser, and held under nitrogen for 1 hour with stirring, then cooled to 80° C. 10 mL distilled water is then added and the mixture is left to stir at 80° C for 24 hrs. Ethanol is then added to precipitate the resulting titania nanocrystals from solution. The precipitate is centrifuged and washed with methanol before centrifuging again. After the last centrifuge, a cake of solid is formed and this is then dried in a vacuum oven for 2 hours, resulting in a white powder.

2.5 g of this powder is then suspended in toluene and then added to 47.5 g of LLDPE resin A (a linear low density polyethylene, with a density of 0.920 g/cc and melt flow index of 1.0 g/10 min) pellets, obtained from Dow Plastics. The solvent is then slowly removed from the resulting mixture under rotary evaporation (reduced pressure). The resulting coated pellets are removed from the round-bottomed flask, extra LLDPE resin A pellets are added to make up a formulation equivalent to 0.5% by weight as titania, and the mixture then extruded and blown by means of an Axion cut flight single-screw extruder at a screw speed of 20 rpm, with the temperature profile of the five-zone extruder set at 165, 185, 210, 220 and 220°C.

Five identical samples of the resulting film were clamped into plastic slide holders before being pre-irradiated, using a low-pressure mercury vapour lamp system, purchased from Heraeus, with single wavelength 254 nm emission, 2 x 60 W lamps. The system is of high power (approx. 100 mW/cm² at the irradiation platform), with a large illumination area (- 1 m arc length) and a parabolic reflector for collection of stray UV light. The spectral emission of a low-pressure mercury vapour lamp is a line spectrum with about 90% of its output at 254 nm. The irradiation times for these five samples are 10 seconds, 30 seconds, 60 seconds, 1 hour and 6 hours. The samples are then aged in the oven at 50°C using the method of Example 1. The carbonyl indexes after 229 days are 0.030, 0.034, 0.059, 0.084 and 0.122 respectively.

### EXAMPLE 3

Oleic acid-coated nanoscale titania (anatase) nanorods (approximately 4 x 25 nm in dimension) are prepared by means of a variant of the method in Example 2. 100mL of oleic acid (Technical grade - 90% - from Sigma-Aldrich) and 50 mL octadecene (technical grade - 90% - from Sigma-Aldrich) is heated to 120° C in a 500 mL, three-necked round-bottomed flask fitted with magnetic stirrer bar, nitrogen inlet and outlet, and condenser, and held under nitrogen for 30 minutes with stirring, then cooled to 100° C. 10mL of titanium(IV) isopropoxide (97% from Sigma-Aldrich) is then added and the mixture heated at 100° C for 30 minutes. Then 10mL of tetrabutyl ammonium hydroxide solution (∼40% in water from Sigma-Aldrich) is added and the mixture reacted at 90 - 100° C overnight. Isopropyl acetate and acetone are then added to precipitate the resulting titania nanocrystals from solution. The precipitate is centrifuged, washed with acetone and centrifuged again and then dried in a vacuum oven for 2 hours, resulting in a cheesy solid.
5 g of this solid is suspended in 20 mL of cyclohexane with the aid of ultrasound. To this is then added 5 g of Hyvis 30 polyisobutylene (HYVIS 30, available from B.P. Trading Ltd., has a molecular weight MW of approximately 1300-1500 and is used as a tackifier in film blowing) and LLDPE resin pellets from Dow Plastics. The solvent is then evaporated off under reduced pressure on a rotary evaporator, and the resulting tacky pellets used in the preparation of a masterbatch. Again, an Axion single-screw extruder ias used to mix and blow the blend compositions - in this case, the tacky pellets are mixed with 25.0 g of LDPE resin B pellets (a low density polyethylene of density 0.922 and a melt flow index of 0.8) and more of the LLDPE resin A pellets to make a total of 500 g. The constituents are physically mixed by hand before being fed into the extruder. The temperature profile of the five-zone extruder is 165, 185, 210, 220 and 220°C. The screw speed is kept constant at 20 rpm. After mixing, the extrudate is cooled and pelletized. Finally, after making up the final formulation by mixing in the appropriate resins by hand, the films are extruded and blown, using the same temperature profile as in Example 2 and screw speed of 20 rpm. In this case, the final formulation (sample B) is composed of 1 percent titania by weight, with 1 percent Hyvis 30 polyisobutylene, 5 percent by weight of LDPE resin B and 93 percent by weight of LLDPE resin A. A reference film sample (sample C) containing LLDPE resin A alone is prepared under identical film extrusion and blowing conditions, with the exception that LLDPE resin A alone is used in the composition.

Pre-irradiation is conducted at 254 nm using the method described in Example 2. Five identical samples from the same molded sheet for samples B and C are pre-irradiated for 0, 1, 5, 10, 30 and 60 minutes respectively.

Weathering tests are then conducted by placing these samples in a Heraeus Suntest Xenon Arc Weatherometer - UV only; continuous light cycle, no moisture cycle, using a 1500W xenon arc solar simulator lamp with an average integrated light intensity power. The lamps are fitted with a UV filter to remove wavelengths below 290 nm. The sample is maintained at a blackbody radiation temperature of 55°C over an extended period. The exposed samples are removed from the Weatherometer after certain periods of time and examined for embrittlement. The composite films that are pre-irradiated showed greater onset of carbonyl peak development than the film without any pre-irradiation (see Table 2). The earliest samples to embrittle (after 300 hours) are those irradiated for 5 and 10 minutes respectively. The last samples to embrittle are the controls (at 500 hours).

**Table 2: Effect of pre-irradiation followed by suntest aging on carbonyl index of nanotitania-containing films**

| | Carrbonyl index | | | |
|---|---|---|---|---|
| Sample | 0 hours in suntest | 100 hours in suntest | 200 hours in suntest | 300 hours in suntest |
| PE alone sample C - nil pre-irradiation | 0.000 | 0.003 | 0.012 | 0.019 |
| PE alone sample C - 60 mins pre-irradiation at 254nm | 0.000 | 0.004 | 0.016 | 0.026 |
| TiO2 PE sample B - nil pre-irradiation | 0.000 | 0.005 | 0.017 | 0.037 |
| TiO2 PE sample B - 60 mins pre-irradiation at 254 nm | 0.000 | 0.005 | 0.030 | 0.066 |

### EXAMPLE 4

Oleic acid-coated nanoscale titania (anatase) nanorods (4 x 25 nm in dimension) are prepared by means of a variation of the method in Example 2: 50 mL of oleic acid (technical grade - 90% - from Sigma-Aldrich), 50 mL octadecene (technical grade - 90% - from Sigma-Aldrich) and 10 mL titanium(IV) isopropoxide (97% from Sigma-Aldrich) are heated to 120° C in a 500 mL, three-necked round-bottomed flask fitted with magnetic stirrer bar, nitrogen inlet and outlet, and condenser, and held under nitrogen for 1 hour with stirring, before being cooled to 100° C. In a separate flask, 1 gm of trimethylamino-N-oxide dihydrate (from Sigma-Aldrich), 2 mL oleic acid and 2 mL octadecene are heated and stirred. The two mixtures are added together and stirred overnight. Ethanol is then added to precipitate the resulting titania nanocrystals from solution. The precipitate is washed twice with ethanol, then centrifuged, washed again, centrifuges and then dried in a vacuum oven for 2 hours, resulting in a sticky white/brown solid.

5 g of the resulting solid is suspended in 80 mL of heptane and sonicated for 15 minutes. To this is then added 5 g of polyisobutylene (average Mᵥ -420,000, average M_{w} -500,000, average Mₙ ∼200,000 by GPC/MALLS, obtained from Sigma-Aldrich) and the mixture stirred overnight. The resulting mixture is precipitated out by means of addition to methanol, and the resulting homogeneous mixture dried for two hours in a vacuum oven at 40°C.

The resulting uniform white solid is used in the preparation of a masterbatch. Again, an Axion single-screw extruder is used to mix the blend compositions - in this case, 8.34 g of the tacky titania/PIB solid is cut into small pieces, and blended with approximately 200 g of LLDPE resin A. The constituents are physically mixed by hand before being fed into the extruder, and extra LLDPE resin A is added to ensure that all the titania is extruded. The temperature profile of the five-zone extruder was 165, 185, 210, 220 and 220°C. The screw speed is kept constant at 20 rpm. After mixing, the extrudate is cooled and pelletized. The final weight is 636.72 g. To this is added 32.0 g LDPE resin B. After making up the final formulation by mixing in the appropriate resins by hand, the films are extruded and blown, using the same temperature profile as in Example 2 and screw speed of 20 rpm. In this case, the final formulation (sample D) is composed of 0.6 percent titania by weight, with 0.6 percent PIB (average Mₙ -200,000), 4.8 percent by weight of LDPE resin B and 93 percent by weight of LLDPE resin A.

Two different forms of pre-irradiation are used: at 254 nm as described in Example 2, and under UV-A illumination as described in Example 1. Nine identical samples are prepared and clamped into plastic slide holders. Of these five samples are irradiated for 0 sec, 1 minute, 5 minutes, 60 minutes and 180 minutes respectively at 254 nm and four samples are irradiated for 0 sec, 1 minute, 5 minutes and 180 minutes under UV-illumination, then thermally aged according to the method of Example 1. The results, illustrated in Table 3, demonstrate the effect of pre-irradiation at 254nm on increasing the rate of carbonyl formation in the thermal aging of these samples.

**Table 3: Effect of pre-irradiation followed by thermal aging on carbonyl index of nanotitania-containing films (sample D)**

| Time of pre-irradiation (mins) | Type of pre-irradiation | 0 h at 50° C | 2160 h at 50° C | 2208 h at 50° C | 2352 h at 50° C | 2568 h at 50° C | 2736 h at 50° C | 2904 h at 50° C | 3048 h at 50° C | 3288 h at 50° C | 3432 h at 50° C | 3576 h at 50° C | 3600 h at 50° C | 3960 h at 50° C | 3984 h at 50° C | 4272 h at 50° C | 4656 h at 50° C |
|---|---|---|---|---|---|---|---|---|---|---|---|---|---|---|---|---|---|
| 0 | 254 nm | 0.000 | 0.008 | | | | | | | | | | | | | | |
| 1 | 254 nm | 0.000 | | | 0.012 | | 0.014 | | 0.011 | | 0.021 | | | | | | |
| 5 | 254 nm | 0.000 | | | 0.009 | | 0.013 | | 0.022 | | 0.022 | | | | | | |
| 60 | 254 nm | 0.000 | | 0.033 | | | | | | | | 0.054 | | 0.059 | | 0.073 | 0.081 |
| 180 | 254 nm | 0.000 | | | | | | | | | | 0.055 | | 0.060 | | 0.086 | 0.079 |
| 0 | UV-A | 0.000 | | | 0.010 | | 0.007 | | 0.006 | | 0.011 | | | | | | |
| 1 | UV-A | 0.000 | | 0.013 | | | | 0.021 | | 0.022 | | | 0.024 | | 0.034 | | |
| 5 | UV-A | 0.002 | | | 0.011 | | 0.013 | | 0.023 | | 0.023 | | | | | | |
| 180 | UV-A | 0.000 | 0.015 | | | | | | | | | | | | | | |

### EXAMPLE 5: The effect of the addition of heavy oil on the whitening of films containing titania prodegradant

Oleic acid-coated nanoscale titania (anatase) nanorods (approximately 4 x 25 nm in dimension) are prepared by means of a modification of the method in Example 3 - in this case, 1000 mL of oleic acid (Technical grade - 90% - from Sigma-Aldrich) iss heated to 120° C in a 2000 mL, three-necked round-bottomed flask fitted with magnetic stirrer bar, nitrogen inlet and outlet, and condenser, and held under nitrogen for 30 minutes with stirring, then cooled to between 80-100° C. 170 mL of titanium (IV) isopropoxide (97% from Sigma-Aldrich) is then added and the mixture left to stir at temperature for 60 minutes. Then 170 mL of tetrabutyl ammonium hydroxide solution (∼40% in water from Sigma-Aldrich) is added and the mixture reacted at 90 - 100° C for 24 hrs. The precipitate is centrifuged, then washed again with acetone and centrifuged, and this cycle is repeated several times before the final product is dried in a vacuum oven for 2 hours, resulting in a beige/white solid. 27.03 g of the resulting powder is suspended in 48.02 g of hexane. In a separate flask, 31.208 g of polyisobutylene (average Mᵥ -420,000, average M_{w} -500,000, average Mₙ -200,000 by GPC/MALLS, obtained from Sigma-Aldrich) is dissolved in 90.8 g of hexane. 8.54 g of the titania in hexane mixture plus 11.64 g of the polyisobutylene solution are mixed together. The resulting mixture is precipitated out by means of methanol addition (50 mL), and the resulting homogeneous mixture dried for three hours in a vacuum oven at 50°C.

This mixture is then made into a masterbatch by means of a Brabender torque rheometer: the rheometer is set to 160°C. Into the mixing chamber is first placed approximately half of the total 26.0 g of LLDPE resin A resin. Then 5.6 g of the resulting PIB/titania mixture is added (chopped into pieces) followed by 6.4 g Mobil DTE oil (heavy). Finally, the remaining Dow LLDPE resin A is added, and the mixture blended at 60 rpm for 5 minutes. The resulting polymer blend is hand pressed and cut into pellets. Finally, after making up the final formulation by mixing in the appropriate resins by hand, the films are extruded and blown using the Axion single screw extruder, as in Example 2, but at a screw speed of 30 rpm. In this case, the final formulation is composed of 1 percent titania by weight, with 1 percent Daelim PBMB-60 (an ∼57-63% masterbatch of Daelim polybutene obtained from Daelim Corporation, Korea), 1 percent PIB (average Mₙ -200,000), 8.3 percent by weight of LDPE resin B, 1.8% heavy oil and 86.9% percent by weight of LLDPE resin A (Sample E).

### Degradation of film with oil coating

Mobil DTE oil (heavy) is pipetted onto one surface of a piece of the resulting film, approximately 20 cm x 30 cm. The film is then folded in ½ and the two sides are rubbed together to ensure oil is uniformly dispersed between the halves. This is left to sit for 2 hours. Then the halves are separated and a Kim Wipe is used to remove excess oil. This results in a final loading of 6.2% of oil on the surface as percentage of the final total mass of film plus oil. This film (sample F) is then placed in the UV-A cabinet (oil-side away from lamps), as in Example 1, with the exception that the films are placed at 5 cm from the lamps and remain under UV-A exposure until embrittlement. The carbonyl indexes upon aging of these samples are given in Table 5. The approximate time to embrittlement is 205 hrs (8.5 days). Small patches began to whiten (slightly) after 7 days. After 8.5 days ∼ 50% of film is still transparent. The rest of the film is hazy white (not opaque).

**Table 4: Cl with time for sample F: film with oil coating (measured by FT-IR (transmission))**

| Time (hours) | Time (days) | Cl |
|---|---|---|
| 0 | 0 | 0.008 |
| 88 | 3.7 | 0.03 |
| 157 | 6.5 | 0.063 |
| 205 | 8.5 | 0.091 |

By contrast, the film with no oil coating (sample E) is also aged in the UV-A cabinet, with the following results (Table 5):

**Table 5: Cl with time for sample E: film with no oil coating (measured by FT-IR(transmission))**

| Time (hours) | Time (days) | Cl |
|---|---|---|
| 0 | 0 | 0.008 |
| 88 | 3.7 | 0.029 |
| 157 | 6.5 | 0.077 |
| 205 | 8.5 | 0.093 |

Approximate time to embrittlement: 205 hrs (8.5 days)
Approximate time to whitening: 48 hours of exposure to UV-A lamps.
The comparable film from Example 4 (sample D), containing no oil in either the film or on the surface, takes less than 24 hours to whiten.

### EXAMPLE 6

A film sample (sample G) is made using Degussa Aeroxide P25 titania (a commercially available titania). In this example, Degussa Aeroxide P25 titania powder is added directly to LLDPE resin A to make a masterbatch, using an Axion single-screw extruder at 20 rpm with the same temperature profile in Example 2. 10.22 g Degussa P25 powder and 372.76 g LLDPE resin A are blended and extruded before being pelletized. This masterbatch is mixed with 18.85 g of Daelim PBMB-60, 49.40 g of LDPE resin B, and a further 370.56 g LLDPE resin A. The constituents are physically mixed by hand before being extruded and blown, using the same temperature profile as in Example 2 and screw speed of 20 rpm. In this case, the final formulation (sample G) is composed of 1.2% percent titania by weight, 6 % of LDPE resin B, 2.3% Daelim PBMB-60 (a 60% PIB masterbatch - PIB mol. wt. 1,800) and 90.5 % of LLDPE resin A. This sample is prepared and pre-irradiated at 254nm as described in Example 2, with the exception that irradiation times of 0 sec, 60 sec, 10 minutes and 60 minutes are used. The samples are then placed in an oven at 50° C for aging, as per Example 1. The effect of pre-irradiation on the rate of carbonyl formation is summarized in Table 6.

**Table 6: Effect of pre-irradiation on LLDPE films containing Degussa P25 (sample G)**

| - | Carbonyl index | |
|---|---|---|
| Time of pre-irradiation at 254nm | 0 days at 50°C | 119 days at 50°C |
| nil | 0.000 | 0.015 |
| 60 sec | 0.006 | 0.020 |
| 10 minutes | 0.000 | 0.030 |
| 60 minutes | 0.005 | 0.052 |

### EXAMPLE 7: Effect of iron stearate/titania combination on rate of thermal aging

A sample (sample H) is made combining ferrous stearate with both Degussa P25 and PIB (average Mᵥ -420,000, average M_{w} -500,000, average Mₙ -200,000 by GPC/MALLS, obtained from Sigma-Aldrich). 4.957 g Degussa P25 powder, 2.036 g ferrous stearate (obtained from Pfaltz and Bauer - FO1280, lot 60086-5) and 15.730 g of a PIB solution (composed of 35.5 g PIB in 95.43 g hexane) are mixed together and the solvent evaporated off. All ingredients are mixed together further using a mortar and pestle. After chopping this mix into pieces, a masterbatch is prepared by adding the resulting solid to LLDPE resin A and extruding and pelletizing as per Example 2, to give 190.05 g product. This masterbatch is then mixed with 7.97 g of Daelim PBMB-60, 24.68 g of LDPE resin B, and a further 235 g LLDPE resin A. The constituents are physically mixed by hand before being extruded and blown, using the same temperature profile as in Example 2 and screw speed of 20 rpm. In this case, the final formulation (sample H is theoretically composed of 1% percent Degussa P25 titania by weight, 5 % of LDPE resin B, 1.7% (a 60% PIB masterbatch - PIB mol. wt. 1,800), 1% PIB (average Mₙ -200,000), 0.4% Fe II stearate and 90.9% LLDPE resin A.

This sample is prepared and pre-irradiated at 254nm as described in Example 2, with the exception that irradiation times of 0 sec, 60 sec, 10 minutes and 60 minutes are used. The samples are then placed in an oven at 50°C for aging, as per Example 1. The effect of pre-irradiation and composition on aging in comparison with sample G is summarized in Table 8. It has been found that neither the use of Degussa P25 alone nor Degussa P25 plus PIB 200,000 in the film results in carbonyl indices on thermal aging larger than 0.038 after 114 to 119 days. However, the combination of ferrous stearate with Degussa P25/PIB 200,000 results in a much-accelerated rate of oxidation. The sample of Sample H that is pre-irradiated for 1 hour at 254 nm prior to placing in the oven has fully embrittled by 144 days, whereas none of the other samples has yet reached embrittlement, including other pieces of sample H that are irradiated for less than an hour.

**Table 7: Effect of pre-irradiation followed by thermal aging on carbonyl index of Degussa P25 -containing films - including those made with ferrous stearate**

| | | Carbonyl index | | |
|---|---|---|---|---|
| | Time of pre-irradiation at 254nm | 0 days at 50°C | 114 days at 50°C | 119 days at 50°C |
| Sample G | 60 minutes | 0.005 | | 0.052 |
| Sample H | 60 minutes | 0.005 | 0.385 | |

### EXAMPLE 8

Into a pomade jar (150 mL) is placed 35.5 g PIB (average Mᵥ -420,000, average M_{w} -500,000, average Mₙ -200,000 by GPC/MALLS, obtained from Sigma-Aldrich). To this is added 95.434 g hexane and the mixture is dissolved by stirring overnight. A portion of this mixture (53.696 g) is abstracted from the jar, and 19.923 g Degussa Aeroxide P25 is added to this portion. The mixture is mixed together in a mortar and pestle to give a white rubbery solid. This solid is dried in a vacuum oven for 3 hrs at 50 °C to give a final mass of 42.54 g. A subsample of this material (10.04 g) is taken and chopped into small pieces before being mixed with 25.12 g of oxidized polyethylene (Sigma -Aldrich, acid number 17 mg KOH/g) and 46.81 g LLDPE resin A. A masterbatch is prepared by extruding and pelletizing as per Example 2, using extra LLDPE resin A in the process to give 159.88 g product. This masterbatch is then mixed with 9.02 g of Daelim PBMB-60, 24.92 g of LDPE resin B, and a further 306.1 g LLDPE resin A. The constituents are physically mixed by hand before being extruded and blown, using the same temperature profile as in Example 2 and screw speed of 20 rpm. In this case, the final formulation (sample J) is theoretically composed of 0.94 % percent Degussa P25 titania by weight, 5.0 % of LDPE resin B, 1.8 % Daelim PBMB-60 (an ∼57-63% masterbatch of Daelim polybutene obtained from Daelim Corporation, Korea), 0.7 % PIB (average Mₙ -200,000), 5.0 % oxidized polyethylene and 86.6 % LLDPE resin A. This sample is prepared and pre-irradiated at 254nm as described in Example 2, with the exception that irradiation times of 0 sec, 60 sec, 10 minutes and 60 minutes are used. The samples are then placed in an oven at 50°C for aging, as per Example 1. The effect of pre-irradiation on the rate of carbonyl formation is summarized in Table 8.

**Table 8: Effect of pre-irradiation on LLDPE films containing Degussa P25 and oxidized polyethylene (sample J)**

| **Carbonyl index on aging** | | |
|---|---|---|
| Time of pre-irradiation at 254nm | 0 days at 50°C | 114 days at 50°C |
| nil | 0.007 | 0.014 |
| 60 sec | 0.007 | 0.016 |
| 10 minutes | 0.011 | 0.034 |
| 60 minutes | 0.012 | 0.050 |

### EXAMPLE 9: Compatibilisation by functionalisation with octadecyltrimethoxysilane

3.493 g Degussa Aeroxide P25 is placed in a watchglass and exposed to a saturated water atmosphere for 5 minutes. The sample is then dried for 2 hours at 120°C, then placed in a dried 250 mL conical flask with quickfit stopper. To this is added freshly prepared mix of 0.395 g octadecyltrimethoxysilane (from Sigma Aldrich) in 100 mL AR grade methanol, and the mixture is flushed with nitrogen and the flask sealed. The mixture is placed in an ultrasound bath for 15 minutes before being left to stand overnight, and the solvent is then evaporated off under reduced pressure on a rotary evaporator. A separate solution of 5.0 g PIB (average Mᵥ -420,000, average M_{w} -500,000, average Mₙ ∼200,000 by GPC/MALLS, obtained from Sigma-Aldrich) in hexane (30 mL) is made up and then mixed with the solid remaining after rotary evaporation. After evaporation of the bulk of the solvent on standing, the resulting rubbery solid is ground in a mortar and pestle as the residue of the solvent evaporated. The resulting product is then mixed with LLDPE resin A for extrusion and pelletizing to give 318.85 g pelletised masterbatch. This is then mixed with 9.06 g Daelim PBMB-60 (a 60% PIB masterbatch - PIB mol. wt. 1,800), 25.07 g LDPE resin B and an extra 147.83 g LLDPE resin A. The constituents are physically mixed by hand before being extruded and blown, using the same temperature profile as in Example 2 and screw speed of 20 rpm. In this case, the final formulation (sample K) is theoretically composed of 0.70 % percent equivalents of titania by weight, 5.0 % of LDPE resin B, 1.8 % Daelim PBMB-60 (a 60% PIB masterbatch - PIB mol. wt. 1,800), 1.0 % PIB (average Mₙ -200,000), and 91.5 % LLDPE resin A. This mixture is apparently more evenly dispersed and easier to blow than samples G, and H.

This sample is prepared and pre-irradiated at 254nm as described in Example 2, with the exception that irradiation times of 0 sec, 60 sec, 10 minutes and 60 minutes are used. The samples are then placed in an oven at 50°C for aging, as per Example 1. The effect of pre-irradiation on the rate of carbonyl formation is summarized in Table 9.

**Table 9: Effect of pre-irradiation on LLDPE films containing Degussa P25 plus octadecyltrimethoxysilane (sample K)**

| | | **Carbonyl index** |
|---|---|---|
| **Time of pre-irradiation at 254nm** | **0 days at 50 degrees C** | **221 days at 50 degrees C** |
| nil | 0.000 | 0.040 |
| 60 sees | 0.000 | 0.111 |
| 10 minutes | 0.000 | 0.142 |
| 60 minutes | 0.008 | 0.229 |

| | **carbonyl index on aging** | |
|---|---|---|
| **Time of pre-irradiation at 254nm** | **0 days at 50 degrees C** | **119 days at 50 degrees C** |
| nil | 0.000 | 0.015 |
| 60 sees | 0.000 | 0.037 |
| 10 minutes | 0.000 | 0.045 |
| 60 minutes | 0.008 | 0.076 |

### EXAMPLE 10: Compatibilisation by blending with polyethylene-co-acrylic acid.

Oleic acid-coated nanoscale titania (Anatase) nanorods (4 x 25 nm in dimension) are prepared by means of a variation of the method in Example 2: 120 mL of oleic acid (Technical grade - 90% - from Sigma-Aldrich), 60 mL octadecene (technical grade - 90% - from Sigma-Aldrich) and 20 mL titanium(IV) isopropoxide (97% from Sigma-Aldrich) are heated to 90°C in a 500 mL, three-necked round-bottomed flask fitted with magnetic stirrer bar, nitrogen inlet and outlet, and condenser, and held at 90°C under nitrogen for 1 hour with stirring. A solution of trimethylamine-N-oxide dihydrate (Sigma Aldrich) in 30 mL distilled water is then added and the mixture stirred at temperature overnight. Methanol is then added to precipitate the resulting titania nanocrystals from solution. The precipitate is centrifuged, washed again with methanol, centrifuged and washed two more times then dried in a vacuum oven for 2 hours, resulting in a beige/white solid.

6.50 g of the resulting solid is chopped into pieces and mixed with 6.50 g poly(ethylene-co-acrylic acid - 20 wt% acrylic acid, Sigma Aldrich) and 65.02 g LLDPE resin A. The resulting mixture is then extruded and pelletised, along with extra LLDPE resin A, to give 168.75 g pelletized masterbatch. This is then mixed with 10.9 g Daelim PBMB-60 (a 60% PIB masterbatch - PIB mol. wt. 1,800), 33.1 g LDPE resin B and extra LLDPE resin A to bring the total weight to 650.0 g. The constituents are physically mixed by hand before being extruded and blown, using the same temperature profile as in Example 2 and screw speed of 20 rpm. In this case, the final formulation (sample L) is theoretically composed of 1.0 % percent oleic acid-coated nanoscale titania (Anatase) nanorods by weight, 1.0% polyethylene-co-acrylic acid, 5.0 % of LDPE resin B, 1.7 % Daelim PBMB-60 and 91.5 % LLDPE resin A.

This sample is prepared and pre-irradiated at 254nm as described in Example 2, with the exception that irradiation times of 0 sec, 60 sec, 10 minutes and 60 minutes are used. The samples are then placed in an oven at 50°C for aging, as per Example 1. The effect of pre-irradiation on the rate of carbonyl formation is summarized in Table 10.

**Table 10: Effect of pre-irradiation on LLDPE films containing Degussa P25 plus polyethylene(co-acrylic acid) (sample L)**

| | **Carbonyl index** | |
|---|---|---|
| **Time of pre-irradiation at 254nm** | **0 days at 50 degrees C** | **119 days at 50 degrees C** |
| nil | 0.000 | 0.007 |
| 60 secs | 0.000 | 0.013 |
| 10 minutes | 0.000 | 0.025 |
| 60 minutes | 0.010 | 0.056 |

### EXAMPLE 11: Compatibilisation by functionalisation with oleic acid

5.027 g Degussa Aeroxide P25 is placed in a 500 mL round-bottomed flask, fitted with stirrer bar, reflux condenser and nitrogen inlet and outlet. To this is added 70 mL oleic acid (Technical grade - 90% - from Sigma-Aldrich) and 50 mL octadecene (technical grade - 90% - from Sigma-Aldrich), and the mixture is refluxed overnight. The mixture is precipitated out with acetone to give a beige material that after drying weighed 4.992 g, of which 0.234 g is removed for analysis. To the remaining solid is added 6.503 g PIB (average Mᵥ -420,000, average M_{w} -500,000, average Mₙ -200,000 by GPC/MALLS, obtained from Sigma-Aldrich) in 4.216 g hexane to give a final mass after evaporation of 12.15 g (indicating some solvent retention). After chopping up, the mass is 12.05 g. 9.46 g of the resulting product is then mixed with LLDPE resin A for extrusion and pelletizing to give 238.78 g pelletised masterbatch. This is then mixed with 6.27 g Daelim PBMB-60 (a 60% PIB masterbatch - PIB mol. wt. 1,800), 18.8 g LDPE resin B and an extra 178.74 g LLDPE resin A to give a final mass of 342.59 g. The constituents are physically mixed by hand before being extruded and blown, using the same temperature profile as in Example 2 and screw speed of 20 rpm. In this case, the final formulation (sample M) is theoretically composed of 0.70 % percent equivalents of titania by weight, 5.0 % of LDPE resin B, 1.8 % Daelim PBMB-60 (a 60% PIB masterbatch - PIB mol. wt. 1,800), 1.0 % PIB (average Mₙ -200,000), and 91.5 % LLDPE resin A.

This sample is prepared and pre-irradiated at 254nm as described in Example 2, with the exception that irradiation times of 0 sec, 60 sec, 10 minutes and 60 minutes are used. The samples are then placed in an oven at 50°C for aging, as per Example 1. The effect of pre-irradiation on the rate of carbonyl formation is summarized in Table 11.

**Table 11: Effect of pre-irradiation on LLDPE films containing Degussa P25 plus oleic acid (sample M)**

| | **Carbonyl index** | |
|---|---|---|
| **Time of pre-irradiation at 254nm** | **0 days at 50 degrees C** | **114 days at 50 degrees C** |
| nil | | 0.013 |
| 60 secs | 0.005 | 0.019 |
| 10 minutes | 0.003 | 0.033 |
| 60 minutes | 0.012 | 0.079 |

### Example 12: Effect of pre-irradiation on commercial titania containing iron

Into a turbo mixer (Caccia, Labo 10) is placed either no extra additive or AEROXIDE® TIO2 PF-2 (3 %, relative to the weight of the LLDPE), along with LLDPE Dowlex NG 5056-E which contains 0.12 % by weight of tris(2,4-di-t-butylphenyl)phosphite, 0.02 % by weight of pentaerythritol tetrakis[3-(3,5-di-tert-butyl-4-hydroxyphenyl)propionate, and 0.03 % by weight of octadecyl-3-(3,5-di-tert-butyl-4-hydroxyphenyl)propionate, and has a melt index of 1.1 g/10 min. (190 °C / 2.16 kg). AEROXIDE® TIO2 PF 2 from Degussa AG is a highly dispersed titanium dioxide manufactured according to the Aerosil® process. The product consists of a mixture of titania with 2% iron(III)oxide.

The mixture is extruded at a maximum temperature of 200 °C using an O.M.C. twin-screw extruder (model ebv 19/25), to give polymer granules, which were subsequently converted to a film 25 µm thick, using a blow-extruder (Dolci™) working at a maximum temperature of 210 °C. The formulations of the resulting samples are given in Table 12 and the effect of pre-irradiation on the rate of carbonyl formation on thermal aging is summarized in Table 13.

Sample N contains no additive, sample contains 3% by weight, based on the weight of the LLDPE of AEROXIDE® TIO2 PF 2 from Degussa AG.

**Table 13: Effect of pre-irradiation on thermal aging of Sample N and O**

| | | **Days in oven at 50 degrees C** | | | | | | | | | | | | | | | |
|---|---|---|---|---|---|---|---|---|---|---|---|---|---|---|---|---|---|
| **PE sample** | **Pretre atment** | **0 days** | **12 days** | **18 days** | **24 days** | **26 days** | **33 days** | **36 days** | **43 days** | **61 days** | **73 days** | **95 days** | **98 days** | **123 days** | **130 days** | **166 days** | **173 days** |
| Sample N | nil irradiation | -0.002 | | -0.004 | | | -0.003 | | | 0.004 | | | | | | | |
| Sample N | 180 min 254nm | 0.014 | | 0.037 | | | 0.036 | | | 0.057 | | | | | | | |
| Sample O | nil irradiation | -0.003 | -0.003 | | 0.000 | | | | | 0.012 | | 0.030 | | 0.038 | | | |
| Sample O | 180 min 254nm | 0.036 | | 0.071 | | 0.061 | | 0.085 | 0.093 | | 0.150 | | 0.167 | | 0.222 | 0.260 | 0.329 |

## Claims

1. A composition comprising
a) a thermoplastic or elastomeric polymer;
b) at least one polymer prodegradant selected from the group consisting of inorganic metal oxides and metal carboxylates;
**characterized in that** the composition is activatable by irradiation to increase the rate of degradation.

2. A composition according to claim 1 wherein the thermoplastic or elastomeric polymer is a polyolefin.

3. A composition according to claim 2 wherein the polyolefin is polyethylene, polypropylene, a polyethylene copolymer or a polypropylene copolymer

4. A composition according to claim 1 wherein the inorganic metal oxide is a titanium dioxide, a metal doped titanium dioxide or a titanium dioxide fixed on silica.

5. A composition according to claim 1 wherein the metal carboxylate is a C₂-C₃₆carboxylate of Fe, Ce, Co, Mn or Ni.

6. A composition according to claim 1 wherein the polymer prodegradant is a mixture of titanium dioxide and a metal carboxylate.

7. A composition according to claim 1 wherein the polymer prodegradant is present in an amount of from 0.1 to 20% by weight, based on the weight of the thermoplastic or elastomeric polymer.

8. A composition according to claim 1 wherein the polymer prodegradant is a nano scale particle with a particle size of less than 200 nm in the largest dimension.

9. A composition according to claim 1 wherein the radiation is UV-light between 250 nm and 380 nm.

10. A composition according to claim 1 which contains additionally additives selected from the group consisting of antioxidants, light stabilizers, processing stabilizers, clarifiers, antistatic- antifogging agents and or those additives that reduce or eliminate whitening of the film aging.

11. A method of increasing or starting the degradation of a thermoplastic or elastomeric polymer by incorporating into the polymer at least one polymer prodegradant selected from the group consisting of inorganic metal oxides and metal carboxylates;
**characterized in that** the polymer prodegradant in the thermoplastic or elastomeric polymer is subjected to radiation.

12. An article made from a composition according to claim 1, which is in the form of a film.

13. An article according to claim 12 wherein the film is initially translucent or transparent to visible light.

14. An article according to claim 12 wherein the film has been stretched after production to increase its length and decrease its thickness, producing a cold drawn thin film.

15. An article according to claim 12 wherein the film is a multilayer film from 3 to 7 layers.

16. An article according to claim 12 for use in agricultural applications which is selected from the group consisting of mulch films, small tunnel films, shading nets and direct covers.

17. An article according to claim 12 for use in packaging, wrapping pallets and plastic bags.

18. An article according to claim 12, which has been subjected to radiation directly after production.

19. An article according to claim 12, which has been subjected to radiation immediately before, during or following its use.

20. An article according to claim 12 wherein the film is treated with different radiation doses over its area, resulting in a selective predetermined rate of degradation.
